(19) **Europäisches Patentamt / European Patent Office / Office européen des brevets**

(11) **EP 4 586 139 B1**

(12) **EUROPEAN PATENT SPECIFICATION**

(45) Date of publication and mention
of the grant of the patent:
**25.03.2026   Bulletin 2026/13**

(51) International Patent Classification (IPC):
***G06N 3/044*** (2023.01)      ***G06N 3/045*** (2023.01)
***G06N 3/0464*** (2023.01)      ***G06N 3/0475*** (2023.01)

(21) Application number: **24223672.7**

(22) Date of filing: **30.12.2024**

(52) Cooperative Patent Classification (CPC):
**G06N 3/044; G06N 3/045; G06N 3/0464;
G06N 3/0475**

(54) **TRANSFORMER FOR CLASSIFICATION**

**TRANSFORMATOR ZUR KLASSIFIKATION**

**TRANSFORMATEUR POUR CLASSIFICATION**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **12.01.2024   US 202418411823**

(43) Date of publication of application:
**16.07.2025   Bulletin 2025/29**

(73) Proprietor: **Microsoft Technology Licensing, LLC
Redmond, WA 98052 (US)**

(72) Inventors:
- **Agneeswaran, Vijay Srinivas
  Redmond, WA 98052 (US)**
- **Patro, Badri Narayana
  Redmond, WA 98052 (US)**

(74) Representative: **Grünecker Patent- und
Rechtsanwälte
PartG mbB
Leopoldstraße 4
80802 München (DE)**

(56) References cited:
**US-A1- 2022 156 587**

- **WONG KEN C L ET AL: "HartleyMHA: Self-attention in Frequency Domain for Resolution-Robust and Parameter-Efficient 3D Image Segmentation", 1 October 2023, MEDICAL IMAGE COMPUTING AND COMPUTER ASSISTED INTERVENTION - MICCAI 2023; [LECTURE NOTES IN COMPUTER SCIENCE; LECT.NOTES COMPUTER], SPRINGER NATURE SWITZERLAND, CHAM, PAGE(S) 364 - 373, ISBN: 978-3-031-43900-1, ISSN: 0302-9743, XP047671105**
- **BADRI N PATRO ET AL: "SpectFormer: Frequency and Attention is what you need in a Vision Transformer", ARXIV.ORG, CORNELL UNIVERSITY LIBRARY, 201 OLIN LIBRARY CORNELL UNIVERSITY ITHACA, NY 14853, 13 April 2023 (2023-04-13), XP091483562**
- **BADRI N PATRO ET AL: "Heracles: A Hybrid SSM-Transformer Model for High-Resolution Image and Time-Series Analysis", ARXIV.ORG, CORNELL UNIVERSITY LIBRARY, 201 OLIN LIBRARY CORNELL UNIVERSITY ITHACA, NY 14853, 3 June 2024 (2024-06-03), XP091775938**
- **BADRI N PATRO ET AL: "Spectral Convolutional Transformer: Harmonizing Real vs. Complex Multi-View Spectral Operators for Vision Transformer", ARXIV.ORG, CORNELL UNIVERSITY LIBRARY, 201 OLIN LIBRARY CORNELL UNIVERSITY ITHACA, NY 14853, 26 March 2024 (2024-03-26), XP091711781**

## Description

## Background

In machine learning contexts, transformers can be used for natural language processing in large language models, computer vision, computerized medical image analysis, computer-based weather prediction, etc. A transformer is a deep learning architecture that can rely on multiple attention layers in a machine learning model. A transformer receives input data (e.g., in a dataset such as an image or text). The input data is split into tokens (e.g, pixels or patches of the image or words or phrases of the text). Each token is converted into a vector (e.g., via an embedding datastore). At each layer, each token is contextualized within the scope of a context window with other (unmasked) tokens via a multi-head attention mechanism, allowing the signals for key (more important) tokens to be amplified and the signals for less important tokens to be diminished.

Machine learning-based attention is a mechanism that mimics human cognitive attention, calculating dynamically adjustable weights for each token during each runtime. In one aspect, attention refers to the ability to dynamically identify the more important parts of the information in a dataset in a given context.

Wong Ken C L et al: "HartleyMHA: Self-attention in Frequency Domain for Resolution-Robust and Parameter-Efficient 3D Image Segmentation", 1 October 2023, Medical Image Computing and Computer Assisted Intervention - MICCAI 2023; [Lecture Notes in Computer Science; Lect.Notes Computer], Springer Nature Switzerland, Cham, pages 364-373, relates to With the introduction of Transformers, different attention based models have been proposed for image segmentation with promising results. Although self-attention allows capturing of long-range dependencies, it suffers from a quadratic complexity in the image size especially in 3D. To avoid the out-of-memory error during training, input size reduction is usually required for 3D segmentation, but the accuracy can be suboptimal when the trained models are applied on the original image size. To address this limitation, inspired by the Fourier neural operator (FNO), The authors introduce the HartleyMHA model which is robust to training image resolution with efficient self-attention. FNO is a deep learning framework for learning mappings between functions in partial differential equations, which has the appealing properties of zero-shot super resolution and global receptive field. The authors modify the FNO by using the Hartley transform with shared parameters to reduce the model size by orders of magnitude, and this allows us to further apply self-attention in the frequency domain for more expressive high-order feature combination with improved efficiency. When tested on the BraTST9 dataset, it achieved superior robustness to training image resolution than other tested models with less than 1% of their model parameters.

Badri N Patro et al: "SpectFormer: Frequency and Attention is what you need in a Vision Transformer", ARXIV.ORG, Cornell University Library, 201 Olin Library Cornell University ITHACA, NY 14853, 13 April 2023, relates to vision transformers which have been applied successfully for image recognition tasks. There have been either multi-headed self-attention based (ViT / /, DelT, [ ]) similar to the original work in textual models or more recently based on spectral layers (Fnetl^], GFNet[ ], AFNO[17 ]). The authors hypothesize that both spectral and multi-headed attention plays a major role. The authors investigate this hypothesis through this work and observe that indeed combining spectral and multiheaded attention layers provides a better transformer architecture. The authors thus propose the novel Spectformer architecture for transformers that combines spectral and multi-headed attention layers. The authors believe that the resulting representation allows the transformer to capture the feature representation appropriately and it yields improved performance over other transformer representations. For instance, it improves the top-1 accuracy by 2% on ImageNet compared to both GFNet-H and LiT. SpectFornier-S reaches 84.25% top-1 accuracy on ImageNet-1K (state of the art for small version). Further, Spectformer-L achieves 85.7% that is the state of the art for the comparable base version of the transformers. The authors further ensure that they obtain reasonable results in other scenarios such as transfer learning on standard datasets such as C1FAR-I0, C1FAR-100, Oxford-IIIT-flower, and Standford Car datasets. The authors then investigate its use in downstream tasks such of object detection and instance segmentation on MS-COCO dataset and observe that Spectformer shows consistent performance that is comparable to the best backbones and can be further optimized and improved. Hence, the authors believe that combined spectral and attention layers are what are needed for vision transformers.

US 2022/156587 A1 relates to methods, systems, and apparatus, which include computer programs encoded on a computer storage medium, for implementing a multi-head deep metric machine-learning architecture. The architecture is used to perform techniques that include obtaining multiple features that are derived from data values of an input dataset and identifying, for an input image of the input dataset, global features and local features among the features. The techniques also include determining a first set of vectors from the global features and a second set of vectors from the local features; computing, from the first and second sets of vectors, a concatenated feature set based on a proxy-based loss function and pairwise-based loss function. A feature representation that integrates the global features and the local features are generated based on the concatenated feature set. A machine-learning model is generated and configured to output a prediction about an image based on inferences derived using the feature representation.

Starting from these prior art documents it is the object of the present invention to provide an improved method for diagnosing tumors, lesions, and other medical conditions.

## Summary

The invention is defined by the appended claims.

In some aspects, the techniques described herein relate to one or more tangible processor-readable storage media embodied with instructions for executing on one or more processors and circuits of a computing device a process for classifying an input dataset, the process including: embedding the input dataset into a first embedding space; inputting the first embedding space into a spectral module including a periodic information processor and an aperiodic information processor; identifying global features in the input dataset using the periodic information processor based on a first subset of the first embedding space; identifying first local features in the input dataset using the aperiodic information processor based on a second subset of the first embedding space; and combining the global features and the first local features into a dataset of classified features of the input dataset.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

Other implementations are also described and recited herein.

## Brief Descriptions of the Drawings

FIG. 1 illustrates an example system for classifying an image.

FIG. 2 illustrates an example transformer flow including multiple spectral layers and multiple attention layers.

FIG. 3 illustrates an example flow within an attention layer for capturing local feature information from a dataset.

FIG. 4 illustrates an example flow within a spectral layer for capturing local feature information and global feature information from a dataset.

FIG 5. illustrates a model of an example system 50 for classifying a dataset a(x).

FIG. 6 illustrates example operations for classifying a dataset.

FIG. 7 illustrates an example computing device for use in implementing the described technology.

## Detailed Descriptions

Transformer models have enabled rich representation learning, at least in part due to efficient token mixing through an attention network (an example attention processor or attention layer). A transformer model generally assists in transforming one sequence of input into another depending on the problem statement (e.g., receiving an image as input and transforming it into a dataset including identified features in the image). These models learn the interactions among spatial locations using attention processing, but the complexity of attention processing increases quadratically as the dataset size increases (e.g., as the image size or text document size increases). Complexity can be reduced by merely reducing the size of the dataset (e.g., reducing the size and/or resolution of the image), but this approach also sacrifices the informational integrity of the dataset (e.g., losing potentially important information from the dataset). Furthermore, the nature of attention operation is to capture local token dependencies, often while facing difficulties in capturing global information.

Accordingly, the described technology provides an architecture for robustly capturing both global information (e.g., the outline of a human's head and shoulder in a portrait image) and local information (e.g., edges and linking lines between features) forming anatomical features in the portrait image, such as eyes, a nose, and a mouth) from a dataset to reduce transformer complexity without losing information from the dataset. The described technology combines spectral transformations with attention processing to capture both global information and local information from a dataset with lower computational complexity. In one implementation, for example, the spectral domain processing may combine a Hartley Transformation with a convolutional operator in the initial spectral layers with deeper attention layers of the classification system, at which point the dataset to processes is smaller than the initial dataset. In this manner, the described technology provides a technical benefit by reducing computational complexity for large datasets while retaining the informational integrity of each input dataset.

For example, in the case of clinical analysis of medical imaging, a high-resolution MRI image can be input into a machine learning model to diagnose tumors, lesions, and other medical conditions. A machine learning model employing the described technology, therefore, can perform the diagnosis more quickly (e.g., with less computational complexity) than in other approaches while retaining the fidelity of the high-resolution MRI image. Moreover, the described technology can also capture global information and local information to provide better, more complete diagnostics results as compared to other methods. As such, better diagnostic results can be obtained quickly without sacrificing important image data from the MRI image.

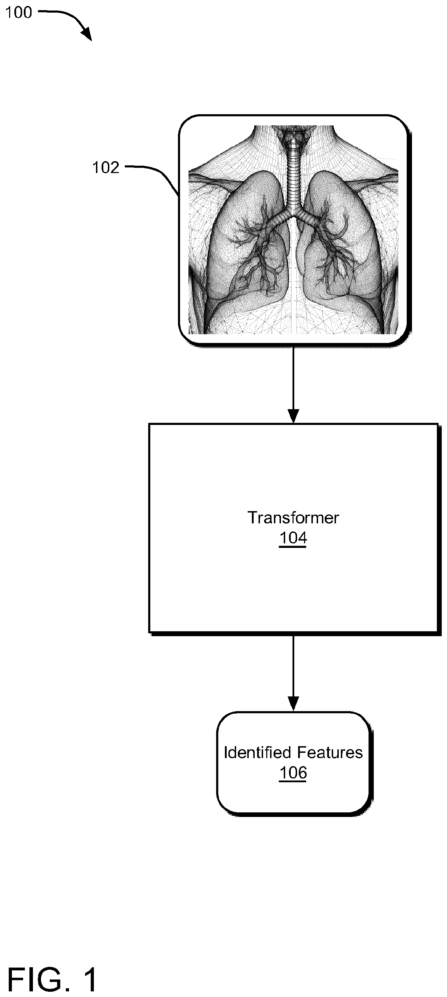

FIG. 1 illustrates an example system 100 for classifying an image 102. The image 102 in this example represents an input dataset that includes medical imaging data, although other types of data may be included in the input dataset, including weather data, drone data, satellite data, audio data, text data, seismic sensor readings, and other data containing discernable features. The system 100 inputs the image 102 to a transformer 104, which processes the image 102 and outputs identified features 106 of the image 102.

In various implementations, the transformer 104 includes a spectral layer (an example spectral processor) that processes periodic information to identify global features in the image 102 and/or processes aperiodic information to identify local features in the image 102. In other implementations, the transformer 104 also includes attention processing at deeper layers of the system flow that executes sequentially after the spectral transformation. As such, one or more attention networks, which can grow quadratically in computing complexity as the size of the input dataset grows (e.g., as the size and/or resolution of the image increases), operate on an intervening dataset that is smaller in size than the input dataset because the spectral processor has gated the data in initial layers and reduced the size of the data being processed by the attention processor. Furthermore, the spectral layers in some implementations have $O(n*\log(n))$ complexity, which results in reduced overall complexity, both in terms of computation and number of parameters.

The identified features 106 includes a listing of identified features, such as tumors and lesions in medical imaging, faces and corresponding identities in video data, drought and flood conditions in satellite imagery, linguistic tokens in speech audio and text, etc. Further, the identified features 106 can be subdivided into at least two categories: (1) global features and (2) local features. In the context of machine learning models, the term "global features" refers to the features of a dataset that describe the dataset as a whole to generalize the dataset itself. Examples include contour representations, shape descriptors, texture features, etc. In contrast, the term "local features" refers to features that describe a specific part of a dataset. Examples include individual facial features of a human in an image and their placement relative to other individual local features, a localized low-pressure system in weather data, distinct terms in audio or text content, etc.

Attention networks that attempt to perform feature detection on an input dataset exhibit complexity challenges because the entire input dataset is processed by the attention network - the computational complexity of attention networks can grow quadratically with input dataset size. In contrast, the transformer 104 pre-processes the input dataset using one or more spectral processors (e.g., spectral layers), which reduces the size of the dataset being input to a subsequent set of one or more attention networks (e.g., attention layer 216, attention layer 218, attention layer 220, and attention layer 222). Furthermore, the spectral processors of the transformer 104 do not grow quadratically in computational complexity as the size of the input dataset grows. As such, with the reduction in size from the input dataset, the subsequent attention layers execute on a smaller dataset than the spectral processors, thereby reducing the overall computational complexity in classifying the input dataset.

In some implementations, the complexity of attention networks is $O(n^2)$ for n input tokens, and some transformers can include only attention layers, which leads to significant computational and memory complexity. By leveraging a few initial spectral layers, which have complexity $O(n*\log(n))$, the overall complexity is reduced. In contrast, transformers without attention networks can limit the long-range dependency handling capacity. Moreover, spectral transformers that use Fourier transforms have a problem with complex-valued outputs, whereas the described spectral layers use the Hartley transform (combined with convolutional networks), which does not have complex-valued output. Thus, by introducing a new spectral layer, the described technology provides a technical benefit of reducing the computational complexity and number of parameters over other approaches.

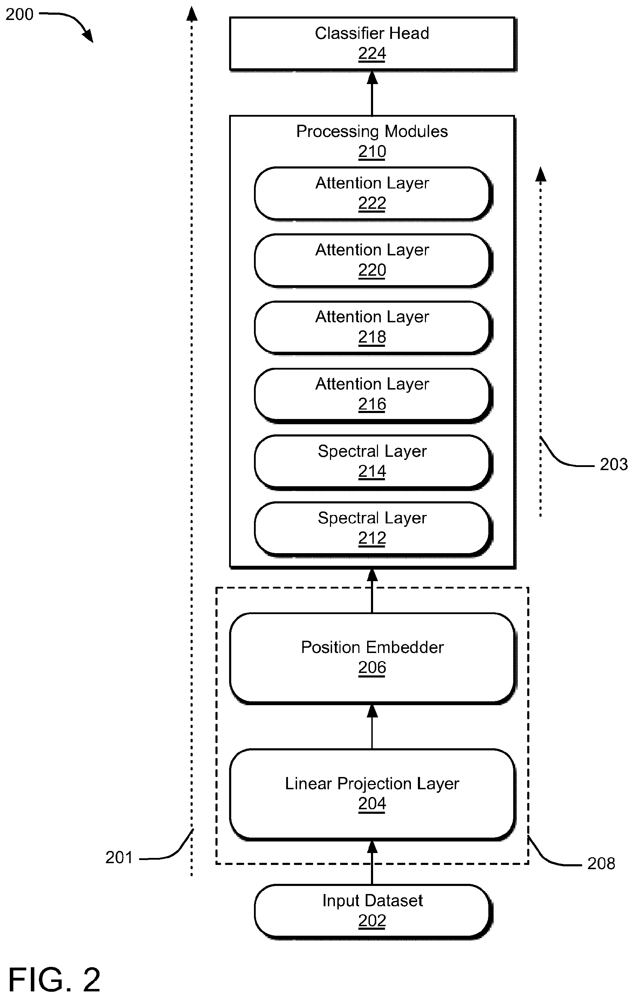

FIG. 2 illustrates an example transformer flow 200 including multiple spectral layers and multiple attention layers. The transformer flow 200 progresses in FIG. 2 from bottom to top, as indicated by a dashed arrow 201 showing the general flow and a dashed arrow 203 showing the flow through the processing modules specifically. An input dataset 202 (e.g., an image, text content, audio data, sensor data) is input to a linear projection layer 204, which is a type of neural network layer that projects a higher dimensional vector into a lower dimensional space. In one implementation, the linear projection layer 204 maps or translates "patch arrays" of the input dataset (e.g., small discrete regions of an image) into embedding vectors. Further, a position embedder 206 is a type of neural network that encodes or translates the positions of tokens in the input dataset 202 (e.g., the positions of patches in an input image) into the embedding vectors. Accordingly, the linear projection layer 204 and the position embedder 206 combine to provide an implementation of an embedding processor 208 that encodes dataset tokens and their respective positions into an embedding space for processing by a spectral processor, an attention processor, etc.

The embedding space is input to processing modules 210, which may include multiple spectral layers (e.g., spectral layer 212 and spectral layer 214) and/or multiple attention layers (e.g., attention layer 216, attention layer, 218, attention layer, 220, and attention layer 222), as shown in FIG. 2. It should also be understood that the spectral layers and attention layers may include a hierarchy of one or more sub-layers in some implementations. Furthermore, the number and position in the transformer flow 200 of specific spectral layers and attention layers may differ from that shown in FIG. 2, although, in most implementations, the spectral layers preceded the attention layers in the transformer flow 200.

The spectral layers represent individual spectral processors that operate in the spectral domain (e.g., the frequency domain) to identify features based on periodic and/or aperiodic input data. In contrast, the attention layers represent individual attention networks that operate in the spatial domain to identify features based on tokens and their relative positions within the input dataset. In various implementations of the described technology, the spectral layers process the embeddings of the input dataset prior to at least one attention layer of the transformer flow 200.

The flow of information is typically gated between each layer of the processing modules 210. Gating refers to a mechanism that selectively filters or modulates the input or output of a processing layer in a neural network. Gating is used to control the flow of information from layer to layer in the network by selectively allowing or blocking certain information. Gating contributes to a technical benefit of the described technology by first executing spectral processing (e.g., the spectral layers that do not exhibit the quadratic computational complexity growth with data size) on a larger set of input data and gating the data passed along to the attention processing (e.g., the attention layers that exhibit the quadratic computational complexity growth with data size). The model parameters or weights determine how much information will pass to the next layer. In this manner, some of the local and global feature identification may be performed with a lower computational complexity in the spectral layers, leaving additional local feature identification to be performed by the attention layers (having a higher computational complexity) on a smaller, gated dataset.

The output of the processing modules 210 is input to a classification head 224, which classifies the input dataset 202 based on the features identified by the processing modules 210. The classification head 224 can score and rank the identified features into a dataset of identified features of the input dataset 202. The classification head is typically implemented as a feed-forward neural network and a softmax layer, which outputs the probability score of the classes, although other implementations are contemplated.

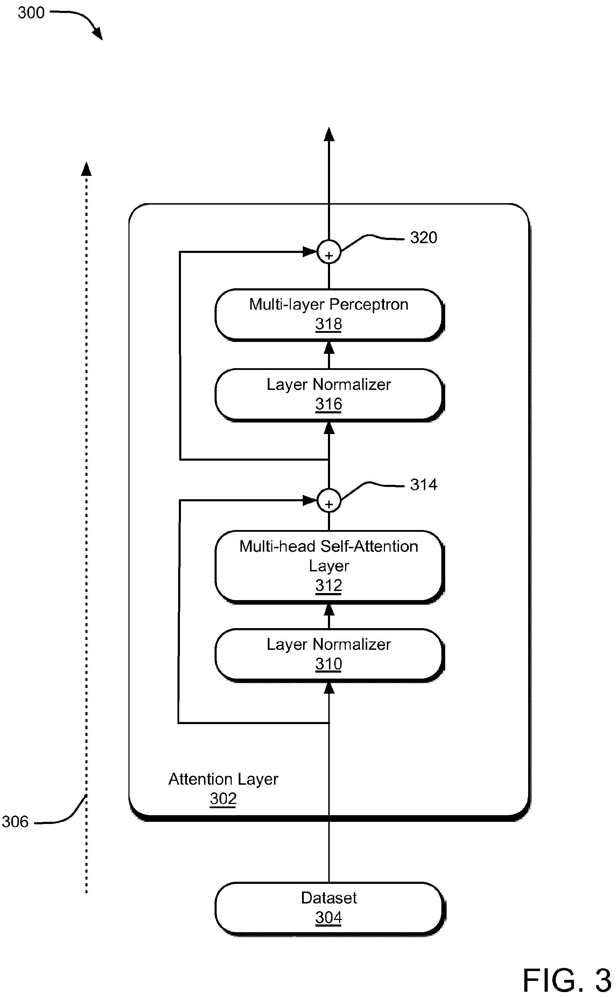

FIG. 3 illustrates an example flow 300 within an attention layer 302 for capturing local feature information from a dataset 304. The flow 300 in FIG. 3 progresses from bottom to top, as indicated by the dashed arrow 306. A dataset 304 (e.g., a gated embedding space from a previous layer) is input to the attention layer 302. The dataset 304 is (1) input to a sequence of operators including a layer normalizer 310 and a multi-head self-attention layer 312, and (2) fed forward to a summer 314. Layer normalizers normalize all the activations of a single layer from a batch by collecting statistics from every unit within the layer. The multi-head self-attention layer 312 includes multiple parallel attention mechanisms that process the dataset 304. The outputs of the multiple parallel attention mechanisms in the multi-head self-attention layer 312 are combined (e.g., concatenated and linearly transformed into the expected dimension) and passed to the summer 314, where the original dataset 304 is also added.

The resulting output of the summer 314 is (1) input to a sequence of operators including a layer normalizer 316 and a multi-layer perceptron 318 and (2) fed forward to a summer 320. The multi-layer perceptron 318 includes a feed-forward artificial neural network consisting of fully connected neurons with a nonlinear kind of activation function organized in multiple layers. Learning occurs in the multi-layer perceptron 318 by changing connection weights after each item of data is processed based on the amount of error in the output compared to the expected result. This is an example of supervised learning and is carried out through backpropagation, a generalization of the least mean squares algorithm in the linear perceptron. In this manner, the multi-layer perceptron 318 can distinguish data that is not linearly separable, thereby distinguishing and identifying local features in the dataset 304. The output of the multi-layer perceptron 318 is passed to the summer 320, where the output of the summer 314 is also added.

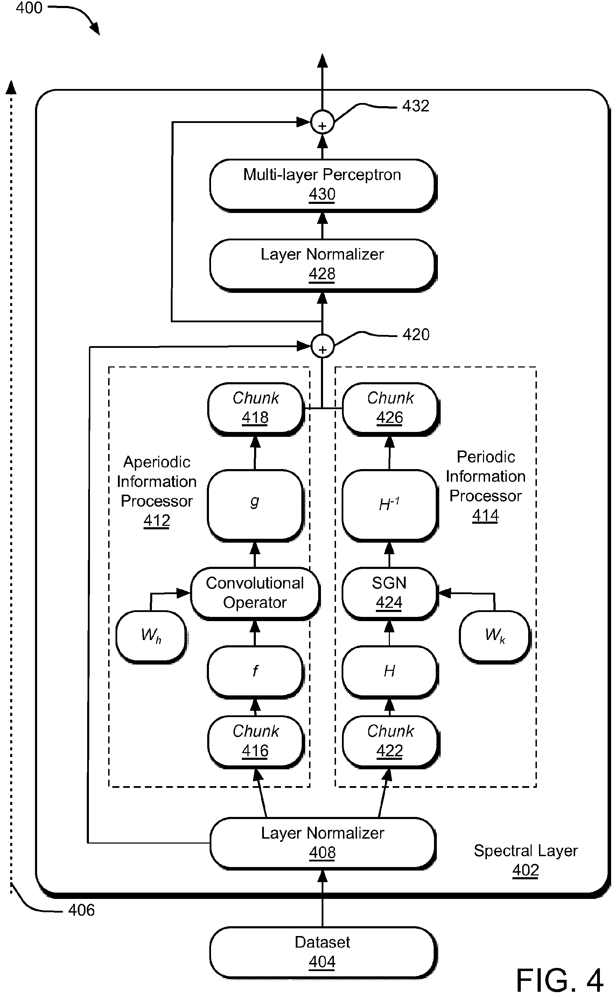

FIG. 4 illustrates an example flow 400 within a spectral layer 402 for capturing local feature information and global feature information from a dataset 404. The flow 400 in FIG. 4 progresses from bottom to top, as indicated by the dashed arrow 406.

The spectral layer 402 is designed to efficiently capture global and local features in the dataset 404 and, therefore, in the initial dataset. In one implementation, a layer 402 of the spectral processor begins the Hartley Transform ($\psi$) component, enabling the component to learn the global information of the dataset 404 using real frequency components. Meanwhile, the second part of the spectral layer undergoes processing through a convolutional operator to capture local image features. These two streams of data are subsequently merged to form a holistic feature representation that is normalized and then passed through a multi-layer perceptron (MLP) layer for classification. The input dataset (and the various gated datasets thereof) can be represented as periodic components and aperiodic components. In implementations, the periodic components can be modeled with the help of a Hartley neural operator (e.g., a Hartley convolutional transformer) to capture the global features of the dataset, and aperiodic components can be modeled using a convolutional neural operator to capture the local features of the dataset.

The dataset 404 (e.g., an embedding space of the original input dataset, a gated embedding space from a previous layer) is input to the spectral layer 402. The dataset 404 is (1) input to a sequence of operators including a layer normalizer 408, an aperiodic information processor 412, and a periodic information processor 414 and (2) fed forward to a summer 420.

The output of the layer normalizer 408 is split into multiple chunks of the dataset 404, each chunk being input to a different processor. In various implementations, the chunks are allocated in an arbitrary manner, are different and mutually exclusive of one another and/or combine to yield the full dataset 404 (e.g., the combinations of chunks include all of the information from the dataset 404).

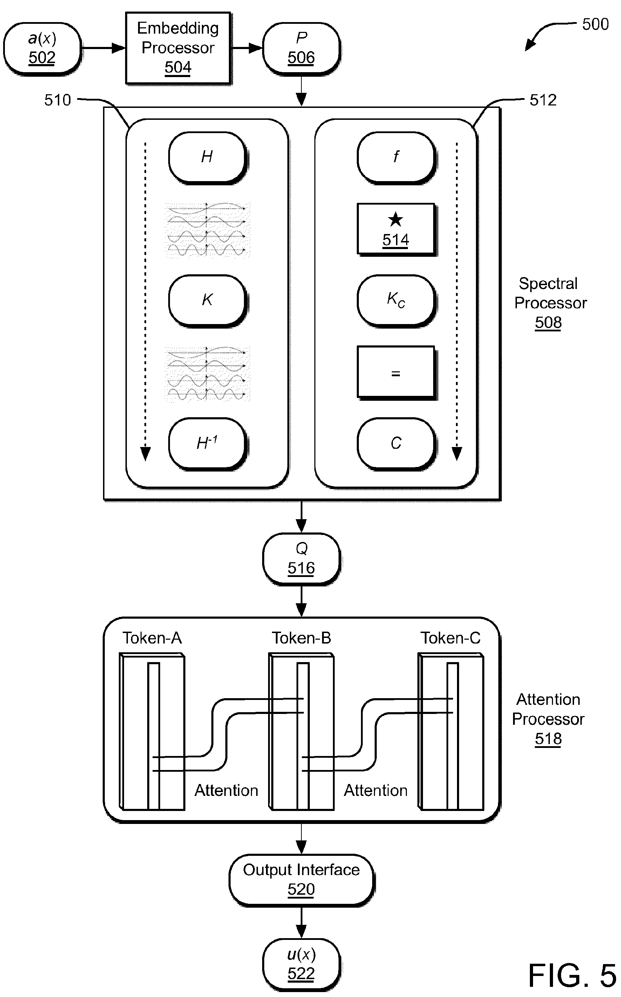

The aperiodic information processor 412 is configured to identify local features in the dataset 404 from an input chunk 416 taken from the dataset 404. A chunk includes a subset of the input dataset embedding. The dataset 404 may be an embedding space of the initial input dataset (e.g., the original image) or an embedding space of the output of a previous layer, which can be a derived version (e.g., a gated version) of the initial input dataset. The data in input chunk 416 is passed through a flow of the aperiodic information processor 412, as further described with respect to FIG. 5, resulting in an output chunk 418, which is output to the summer 420. Function g represents a function of the form y = *mx* + *c*, where *m* represents weights and constant *c* represents a bias term.

The periodic information processor 414 is configured to identify global features in the dataset 404 from a chunk 422 taken from the dataset 404. The data in the input chunk 416 is passed through a flow of the periodic information processor 412, as further described with respect to FIG. 5, including a spectral gating network 424 (SGN), resulting in a chunk 426, which is output to the summer 420. SGN is responsible for identifying how much spectral information will flow into subsequent layers.

The resulting output of the summer 420 is (1) input to a sequence of operators including a layer normalizer 428 and a multi-layer perceptron 430 and (2) fed forward to a summer 432. The output of the multi-layer perceptron 430 is passed to the summer 432, where the output of the summer 420 is also added. The output of the spectral layer 402 is passed along to a subsequent spectral layer or a subsequent attention layer.

FIG 5. illustrates a model of an example system 500 for classifying a dataset *a*(*x*) 502. An embedding processor 504 embeds the dataset *a*(*x*) 502 in an embedding space *P* 506, which is input to a spectral processor 508. As previously described, in one implementation, a periodic processor layer 510 of the spectral processor 508 begins the Hartley Transform ($\psi$) component, enabling the component to learn the global information of the dataset using real frequency components. A Hartley transform can be compared to a Cosine transform. A Cosine transform uses a Cosine neural operator to learn a mapping between two infinite dimensional spaces from a finite collection of observed input-output pairs

$$\{a_j, u_j\}_{j=1}^{N}$$

using a function *A* to function *U*

$$F : A \times \Theta \to U.$$

Equivalently,

$$F_\theta : A \to U, \theta \in \Theta.$$

A kind of Fourier neural operation may be used in the spectral processor 508. The input $a \in A$ is projected to a higher dimensional representation $v_0(x) = P(a(x))$ by the local transformation *P*, which is usually parameterized by a shallow, fully connected neural network. Several iterations of $v_t \mapsto v_{t+1}$ updates are applied. The output $u(x) = Q(v_T(x))$ is the projection of $v_T$ by the local transformation $Q : \mathcal{R}^{d_v} \to \mathcal{R}^{d_u}$. In each iteration, the update $v_t \mapsto v_{t+1}$ is defined as the composition of a non-local integral operator *K* and a local, nonlinear activation function $\sigma$. The iterative update to the representation $v_t \mapsto v_{t+1}$ by

$$v_{t+1}(x) = \sigma\big((K(a; \phi)v_t)(x)\big), \quad \forall x \in D \qquad (1)$$

The Kernel integral operator K is defined by

$$(K(a; \phi)v_t)(x) := \int_D k(x, y, a(x), a(y); \phi)v_t(y)\mathrm{d}y, \qquad (2)$$

where $k_\phi$ is a neural network parameterized by $\phi \in \Theta_K$. Here $k_\phi$ plays the role of a kernel function that the transform learns from the input data.

The kernel integral operator is replaced by a convolutional operator defined in Cosine space. Let $\psi$ denote the Cosine transform of a function $f : D \to \mathcal{R}^{d_v}$ and let $\psi^{-1}$ denote its inverse, then

$$\psi_j(k) = \int_D f_j(x) \cos\langle 2\pi k, x\rangle \mathrm{d}x,$$

$$\psi_j^{-1}(x) = \frac{1}{\pi} \int_D f_j(k) \cos\langle 2\pi k, x\rangle \, \mathrm{d}k.$$

For the special case of the Green's kernel $K(s, t) = K(s - t)$, the integral leads to global convolution. By applying $k_\phi$ $(x, y, a(x), a(y)) = k_\phi(x - y)$ in Equation (2) and applying the convolution theorem, then

$$(K(a : \phi)v_t)(x) = \psi^{-1}\left(\psi\left(k_\phi\right) \cdot \psi(v_t)\right)(x), \quad \forall x \in D.$$

The Cosine integral operator K is defined as

$$(K(\phi)v_t)(x) = \psi^{-1}\left(R_\phi \cdot (\psi v_t)\right)(x) \quad \forall x \in D \qquad (3)$$

where $R_\phi$ is the real value Cosine transform of a periodic function $k : D \to R^{d_v \times d_u}$ parameterized by $\phi \in \Theta_k$.

Also, as previously described, in one implementation, an aperiodic processor layer 512 of the spectral processor 508 undergoes processing through one or more convolutional neural operator 514 to capture local image features. In various implementations, the one or more convolutional operators are performed with discrete kernels

$$K_c = \sum_{i,j=1}^{k} k_{i,j} \delta_{z_{ij}} \qquad (4)$$

defined on an $s \times s$ uniform grid with $z_{ij}$ being the resulting grid points and $\delta_x$ is the Dirac measure at point $x$. The convolution operator of a single channel can be defined as

$$K_c f(x) = (K_c * f)x = \sum_{i,j=1}^{k} k_{ij} f\left(x - z_{ij}\right). \qquad (5)$$

The spectral processor 508, therefore, integrates two processing components: (1) the convolutional representation denoted by $C = K_c f(x)$, defined in Equation (5), and (2) the spectral representation $V$ defined in Equation (1). This integration is formulated through the following expression:

$$V_{t+1}(x) = C_t \circ \sigma\left((K(a; \phi)v_t)(x)\right), \qquad \forall x \in D \qquad (6)$$

where $\circ$ denotes the concatenation operation. Firstly, $C_t$, the convolutional representation is incorporated. Secondly, the spectral transformation involving the kernel function $K$ parameterized by $a$ and $\phi$ acts upon the previous representation $v_t$. The output of the spectral processor 508 is specified by an embedding space $Q$ 516.

An attention processor 518 includes a multi-headed self-attention followed by multi-layer perceptron layers. This combination of mechanisms facilitates the model's ability to capture complex relationships and patterns in the data. The attention heads of the model consist of the Query-Key (QK) circuit and the Output-Value (OV) circuit, both described below.

The Query-Key circuit computes attention scores between each query token and each key token. These attention scores determine how much a given query token wants to attend to a particular key token. The final representation is obtained using query and key vectors for the attention head by applying weight matrices $W_Q$ and $W_K$ to the input sequence X (i.e., $k_i = W_K x_i$, $q_i = W_Q x_i$). The attention scores are calculated using the dot product between the query and key vectors, followed by a softmax operation:

$$A = \mathrm{softmax}(q^T \cdot k) = \mathrm{softmax}\left(x^T \cdot W_Q^T \cdot W_K \cdot x\right).$$

The Output-Value circuit determines how each token's information will affect the output logits if attended to. In statistics and machine learning, a logit is a quantile function associated with the standard logistic distribution. The value vectors by applying the weight matrix $W_V$ to the input sequence X, $v_i = x_i \cdot W_V$. The resulting vector for each token is computed by linearly combining value vectors based on the attention pattern:

$$\mathcal{R}_i = \sum_j \mathrm{A}_{i,j} \cdot \mathrm{v}_j \qquad\qquad (7)$$

The operation of the attention heads involves extracting information from the residual stream associated with a specific token and subsequently transmitting it to the residual stream connected with another token. In the first step, it extracts pertinent information from the residual stream of a designated token, and in the second step, it transits amassed information into the residual stream linked to a different token.

The output of the attention processor 518 is passed to an output interface 520 (e.g., a software interface, a hardware interface, or a combination of both software and hardware) as a dataset $U(x)$ 522, a list of identified features of the input dataset $a(x)$ 502.

The Hartley Convolution Neural Operator block combines the spectral representation $V$, as mentioned in equation (6), and the attention representation $\mathcal{R}$, as mentioned in equation (7) and defined as

$$U(x) := \mathcal{R}\big(V(x)\big), \qquad \forall x \in D \qquad\qquad (8)$$

The Combined Convolutional Neural Operator (CCNO) described herein introduces a novel hybrid approach by combining Discrete Hartley Transformation (DCT) or Discrete Cosine Transformation (DCT) with convolutional nets in initial layers and integrating self-attention in deeper layers. This architecture allows CCNO to effectively capture both global and local information representations, addressing a key limitation of traditional transformers with O(n2) complexity. Particularly, CCNO-S achieves state-of-the-art performance on ImageNet with an impressive 84.5% top-1 accuracy, while the larger variant, CCNO-L, shows notable results at 85.8%m and CCNO-H has reached 86.4%, which is the highest accuracy achieved in ImageNet 1K with 150 million parameters, which is an order of magnitude lesser number of parameters compared to ViT-22B, which requires billions of parameters. Extending beyond classification tasks, an evaluation of object detection and image segmentation using the MS-COCO dataset further validates the efficacy of CCNO across various computer vision applications. The unified architecture of CCNO, combining spectral transformations with convolutions and attention mechanisms, addresses the local-global trade-off and offers a promising direction for advancing deep learning in computer vision.

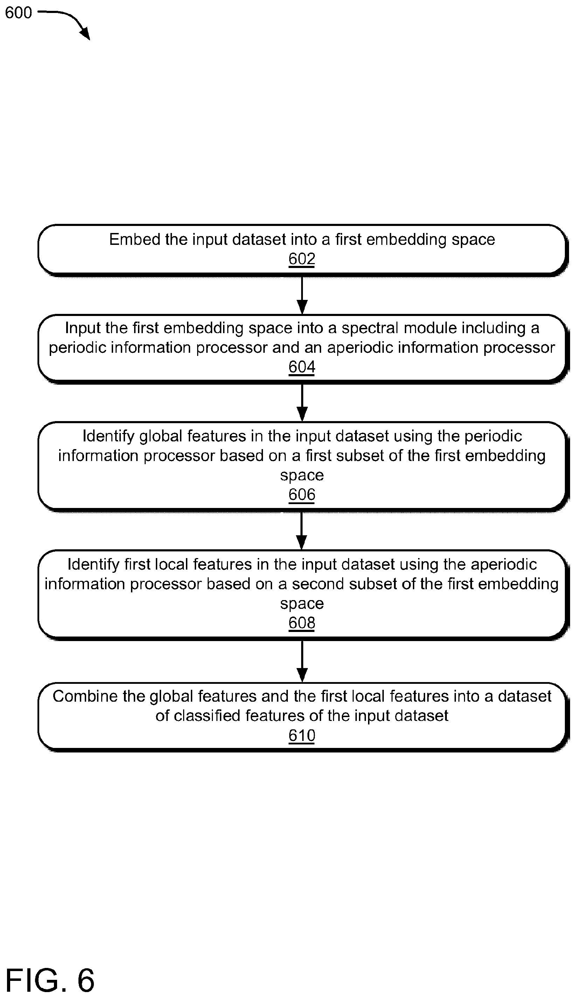

FIG. 6 illustrates example operations 600 for classifying a dataset. An embedding operation 602 embeds the input dataset into a first embedding space. A spectral processing operation 604 inputs the first embedding space into a spectral module that includes a periodic information processor and an aperiodic information processor. A periodic information processing operation 606 identifies global features in the input dataset using the periodic information processor based on a first subset of the first embedding space. An aperiodic information processing operation 608 identifies local features in the input dataset using the aperiodic information processor based on a second subset of the first embedding space. The first subset and the second subset are different. An output operation 610 combines the global features and the first local features into a dataset of classified features of the input dataset.

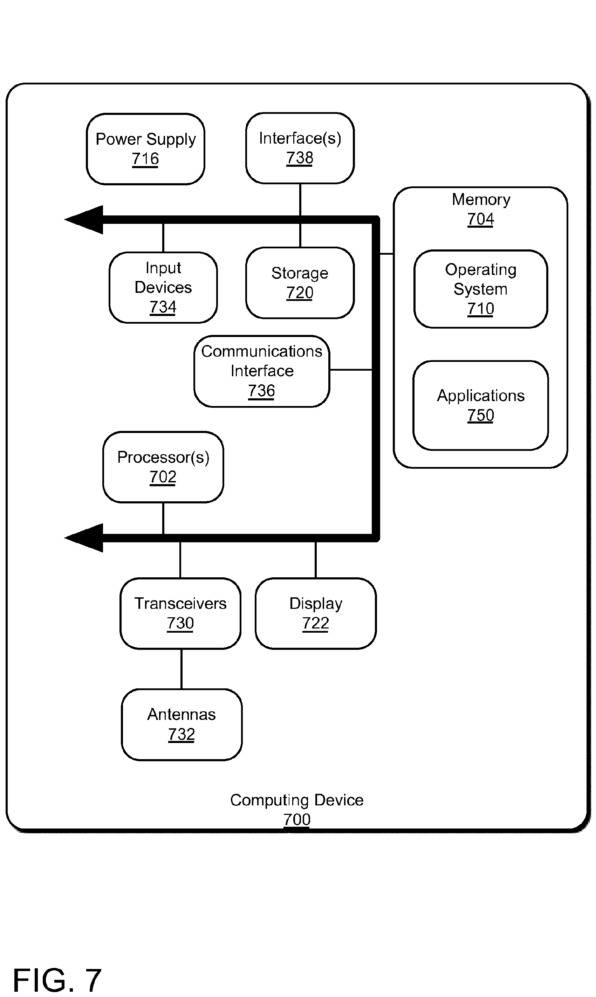

FIG. 7 illustrates an example computing device 700 for use in implementing the described technology. The computing device 700 may be a client computing device (such as a laptop computer, a desktop computer, or a tablet computer), a server/cloud computing device, an Internet-of-Things (IoT), any other type of computing device, or a combination of these options. The computing device 700 includes one or more hardware processor(s) 702 and a memory 704. The memory 704 generally includes both volatile memory (e.g., RAM) and nonvolatile memory (e.g., flash memory), although one or the other type of memory may be omitted. An operating system 710 resides in the memory 704 and is executed by the processor(s) 702. In some implementations, the computing device 700 includes and/or is communicatively coupled to storage 720.

In the example computing device 700, as shown in FIG. 7, one or more software modules, segments, and/or processors, such as applications 750, a transformer, linear projection layers, position embedders, spectral layers, spectral processors, attention layers, attention processors, attention layers, attention networks, processing modules, classifier heads, layer normalizers, multi-layer perceptrons, multi-head self-attention layers, convolutional operators, spectral gating networks, embedding processors, output interfaces, and other program code and modules are loaded into the operating system 710 on the memory 704 and/or the storage 720 and executed by the processor(s) 702. The storage 720 may store an input dataset, a dataset of identified features, embedding spaces, chunks, weights, and other data and be local to the computing device 700 or may be remote and communicatively connected to the computing device 700. In particular, in one implementation, components of a system for classifying a dataset may be implemented entirely in hardware or in a combination of hardware circuitry and software.

The computing device 700 includes a power supply 716, which may include or be connected to one or more batteries or other power sources, and which provides power to other components of the computing device 700. The power supply 716 may also be connected to an external power source that overrides or recharges the built-in batteries or other power sources.

The computing device 700 may include one or more communication transceivers 730, which may be connected to one or more antenna(s) 732 to provide network connectivity (e.g., mobile phone network, Wi-Fi®, Bluetooth®) to one or more other servers, client devices, IoT devices, and other computing and communications devices. The computing device 700 may further include a communications interface 736 (such as a network adapter or an I/O port, which are types of communication devices). The computing device 700 may use the adapter and any other types of communication devices for establishing connections over a wide-area network (WAN) or local-area network (LAN). It should be appreciated that the network connections shown are exemplary and that other communications devices and means for establishing a communications link between the computing device 700 and other devices may be used.

The computing device 700 may include one or more input devices 734 such that a user may enter commands and information (e.g., a keyboard, trackpad, or mouse). These and other input devices may be coupled to the server by one or more interfaces 738, such as a serial port interface, parallel port, or universal serial bus (USB). The computing device 700 may further include a display 722, such as a touchscreen display.

The computing device 700 may include a variety of tangible processor-readable storage media and intangible processor-readable communication signals. Tangible processor-readable storage can be embodied by any available media that can be accessed by the computing device 700 and can include both volatile and nonvolatile storage media and removable and non-removable storage media. Tangible processor-readable storage media excludes intangible, transitory communications signals (such as signals per se) and includes volatile and nonvolatile, removable and non-removable storage media implemented in any method, process, or technology for storage of information such as processor-readable instructions, data structures, program modules, or other data. Tangible processor-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing device 700. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

Some implementations may comprise an article of manufacture, which excludes software per se. An article of manufacture may comprise a tangible storage medium to store logic and/or data. Examples of a storage medium may include one or more types of computer-readable storage media capable of storing electronic data, including volatile memory or nonvolatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described embodiments. The executable computer program instructions may include any suitable types of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

**Claims**

1. A computer-implemented method (600) of classifying an input dataset (404, 304, 202) for diagnosing tumors, lesions, and other medical conditions, the method (600) comprising:

   embedding (602) the input dataset (404, 304, 202) into a first embedding space, wherein the input dataset (404, 304, 202) comprises a high-resolution MRI image;
   inputting (604) the first embedding space into a spectral module including a periodic information processor (414) and an aperiodic information processor (412);
   identifying (606) global features in the input dataset (404, 304, 202) using the periodic information processor (414) based on a first subset of the first embedding space;
   identifying (608) first local features in the input dataset (404, 304, 202) using the aperiodic information processor (412) based on a second subset of the first embedding space, wherein the first subset and the second subset are different; and
   combining (610) the global features and the first local features into a dataset (404, 304) of classified features of the input dataset (404, 304, 202).

2. The method of claim 1, further comprising:

   identifying second local features in the input dataset using an attention processor based on output of the spectral module; and
   combining the second local features with the global features and the first local features in the dataset of the classified features of the input dataset.

3. The method of claim 1 or 2, wherein the periodic information processor identifies global features in the input dataset using a frequency domain.

4. The method of claim 3, wherein the periodic information processor translates the first embedding space from a spatial domain into the frequency domain using a Hartley transformation, identifies at least one of the global features using a spectral gating network, and applies an inverse Hartley transformation to translate the first embedding space from the frequency domain to the spatial domain.

5. The method of one of claims 1 to 4, wherein the aperiodic information processor identifies local features in the input dataset using at least one Hartley convolutional transformer.

6. The method of one of claims 1 to 5, wherein the first subset and the second subset are mutually exclusive.

7. The method of one of claims 1 to 6, wherein the first subset and the second subset combine to yield the input dataset.

8. A computing system (500, 100) for classifying an input dataset (404, 304, 202) for diagnosing tumors, lesions, and other medical conditions, the computing system (500, 100) comprising:

   one or more hardware processors (702);
   an embedding processor (504, 208) executable by one or more hardware processors (702) and configured to embed the input dataset (404, 304, 202) into a first embedding space, wherein the input dataset (404, 304, 202) comprises a high-resolution MRI image;
   a spectral processor (508) executable by the one or more hardware processors (702) and configured to input the first embedding space into a spectral module including a periodic information processor (414) and an aperiodic information processor (412), wherein the periodic information processor (414) is configured to identify global features in the input dataset (404, 304, 202) based on a first subset of the first embedding space and the aperiodic information processor (412) is configured to identify first local features in the input dataset (404, 304, 202) based on a second subset of the first embedding space, wherein the first subset and the second subset are different; and
   an output interface (520) executable by the one or more hardware processors (702) and configure to combine the global features and the first local features into a dataset (404, 304) of classified features of the input dataset (404, 304, 202).

9. The computing system of claim 8, wherein the spectral processor outputs a second embedding space and further comprising:

an attention processor executable by the one or more hardware processors and configured to identify second local features in the input dataset using attention processing based on the second embedding space, wherein the output interface is further configured to combine the second local features with the global features and the first local features in the dataset of the classified features of the input dataset.

10. The computing system of claim 8, wherein the periodic information processor identifies global features in the input dataset using a frequency domain.

11. The computing system of claim 10, wherein the periodic information processor is configured to translate the first embedding space from a spatial domain into the frequency domain using a neural operator, identify at least one of the global features using a spectral gating network, and apply an inverse transformation to translate the first embedding space from the frequency domain to the spatial domain.

12. The computing system of claim 8, wherein the aperiodic information processor identifies local features in the input dataset using at least one convolutional operator, or

    wherein the input dataset is an image, or
    wherein the first subset and the second subset combine to yield the input dataset.

13. One or more tangible processor-readable storage (720) media embodied with instructions for executing on one or more processors (702) and circuits of a computing device (700) a process (600) for classifying an input dataset (404, 304, 202) for diagnosing tumors, lesions, and other medical conditions, the process (600) comprising:

    embedding (602) the input dataset (404, 304, 202) into a first embedding space, wherein the input dataset (404, 304, 202) comprises a high-resolution MRI image;
    inputting (604) the first embedding space into a spectral module including a periodic information processor (414) and an aperiodic information processor (412);
    identifying (606) global features in the input dataset (404, 304, 202) using the periodic information processor (414) based on a first subset of the first embedding space;
    identifying (608) first local features in the input dataset (404, 304, 202) using the aperiodic information processor (412) based on a second subset of the first embedding space; and
    combining (610) the global features and the first local features into a dataset (404, 304) of classified features of the input dataset (404, 304, 202).

14. The one or more tangible processor-readable storage media of claim 13, wherein the process further comprises:

    identifying second local features in the input dataset using an attention processor based on output of the spectral module; and
    combining the second local features with the global features and the first local features in the dataset of the classified features of the input dataset, or
    wherein the periodic information processor identifies global features in the input dataset using a frequency domain, and/or
    wherein the periodic information processor translates the first embedding space from a spatial domain into the frequency domain using a Hartley Transformation, identifies at least one of the global features using a spectral gating network, and applies an Inverse Hartley Transformation to translate the first embedding space from the frequency domain to the spatial domain.

15. The one or more tangible processor-readable storage media of claim 13 or 14, wherein the aperiodic information processor identifies local features in the input dataset using at least one convolutional operator, or
    wherein the first subset and the second subset are mutually exclusive and combine to yield the input dataset.

**Patentansprüche**

1. Computerimplementiertes Verfahren (600) zum Klassifizieren eines Eingabedatensatzes (404, 304, 202) zum Diagnostizieren von Tumoren, Läsionen und anderen medizinischen Zuständen, wobei das Verfahren (600) umfasst:

    Einbetten (602) des Eingabedatensatzes (404, 304, 202) in einen ersten Einbettungsraum, wobei der Eingabedatensatz (404, 304, 202) ein hochauflösendes MRT-Bild umfasst;

Eingeben (604) des ersten Einbettungsraums in ein Spektralmodul, das einen periodischen Informationsprozessor (414) und einen aperiodischen Informationsprozessor (412) umfasst;

Identifizieren (606) globaler Merkmale in dem Eingabedatensatz (404, 304, 202) unter Verwendung des periodischen Informationsprozessors (414) auf der Grundlage einer ersten Teilmenge des ersten Einbettungsraums;

Identifizieren (608) erster lokaler Merkmale in dem Eingabedatensatz (404, 304, 202) unter Verwendung des aperiodischen Informationsprozessors (412) auf der Grundlage einer zweiten Teilmenge des ersten Einbettungsraums, wobei die erste Teilmenge und die zweite Teilmenge unterschiedlich sind; und

Kombinieren (610) der globalen Merkmale und der ersten lokalen Merkmale zu einem Datensatz (404, 304) von klassifizierten Merkmalen des Eingabedatensatzes (404, 304, 202).

2. Verfahren nach Anspruch 1, das ferner umfasst:

Identifizieren zweiter lokaler Merkmale in dem Eingabedatensatz unter Verwendung eines Aufmerksamkeitsprozessors auf der Grundlage der Ausgabe des Spektralmoduls; und

Kombinieren der zweiten lokalen Merkmale mit den globalen Merkmalen und den ersten lokalen Merkmalen in dem Datensatz der klassifizierten Merkmale des Eingabedatensatzes.

3. Verfahren nach Anspruch 1 oder 2, wobei der periodische Informationsprozessor globale Merkmale in dem Eingabedatensatz unter Verwendung des Frequenzbereichs identifiziert.

4. Verfahren nach Anspruch 3, wobei der periodische Informationsprozessor den ersten Einbettungsraum von einem räumlichen Bereich in den Frequenzbereich unter Verwendung einer Hartley-Transformation übersetzt, mindestens eines der globalen Merkmale unter Verwendung eines spektralen Gating-Netzwerks identifiziert und eine inverse Hartley-Transformation anwendet, um den ersten Einbettungsraum vom Frequenzbereich in den räumlichen Bereich zu übersetzen.

5. Verfahren nach einem der Ansprüche 1 bis 4, wobei der aperiodische Informationsprozessor lokale Merkmale in dem Eingabedatensatz unter Verwendung mindestens eines Hartley-Faltungstransformators identifiziert.

6. Verfahren nach einem der Ansprüche 1 bis 5, wobei die erste Teilmenge und die zweite Teilmenge sich gegenseitig ausschließen.

7. Verfahren nach einem der Ansprüche 1 bis 6, wobei die erste Teilmenge und die zweite Teilmenge zusammen den Eingabedatensatz ergeben.

8. Rechensystem (500, 100) zum Klassifizieren eines Eingabedatensatzes (404, 304, 202) zum Diagnostizieren von Tumoren, Läsionen und anderen medizinischen Zuständen, wobei das Rechensystem (500, 100) umfasst:

einen oder mehrere Hardwareprozessoren (702);

einen Einbettungsprozessor (504, 208), der von einem oder mehreren Hardwareprozessoren (702) ausführbar und konfiguriert ist, den Eingabedatensatz (404, 304, 202) in einen ersten Einbettungsraum einzubetten, wobei der Eingabedatensatz (404, 304, 202) ein hochauflösendes MRT-Bild umfasst;

einen Spektralprozessor (508), der von dem einen oder den mehreren Hardwareprozessoren (702) ausführbar und konfiguriert ist, den ersten Einbettungsraum in ein Spektralmodul einzugeben, das einen periodischen Informationsprozessor (414) und einen aperiodischen Informationsprozessor (412) umfasst, wobei der periodische Informationsprozessor (414) konfiguriert ist, globale Merkmale in dem Eingabedatensatz (404, 304, 202) auf der Grundlage einer ersten Teilmenge des ersten Einbettungsraums zu identifizieren, und der aperiodische Informationsprozessor (412) konfiguriert ist, erste lokale Merkmale in dem Eingabedatensatz (404, 304, 202) auf der Grundlage einer zweiten Teilmenge des ersten Einbettungsraums zu identifizieren, wobei die erste Teilmenge und die zweite Teilmenge unterschiedlich sind; und eine Ausgabeschnittstelle (520), die von dem einen oder den mehreren Hardwareprozessoren (702) ausführbar ist und konfiguriert ist, die globalen Merkmale und die ersten lokalen Merkmale zu einem Datensatz (404, 304) von klassifizierten Merkmalen des Eingabedatensatzes (404, 304, 202) zu kombinieren.

9. Rechensystem nach Anspruch 8, wobei der Spektralprozessor einen zweiten Einbettungsraum ausgibt und ferner umfasst:

einen Aufmerksamkeitsprozessor, der von dem einen oder den mehreren Hardwareprozessoren ausführbar und konfiguriert ist, zweite lokale Merkmale in dem Eingabedatensatz unter Verwendung einer Aufmerksamkeitsverarbeitung auf der Grundlage des zweiten Einbettungsraums zu identifizieren, wobei die Ausgabeschnittstelle ferner konfiguriert ist, die zweiten lokalen Merkmale mit den globalen Merkmalen und den ersten lokalen Merkmalen in dem Datensatz der klassifizierten Merkmale des Eingabedatensatzes zu kombinieren.

10. Rechensystem nach Anspruch 8, wobei der periodische Informationsprozessor globale Merkmale in dem Eingabedatensatz unter Verwendung des Frequenzbereichs identifiziert.

11. Rechensystem nach Anspruch 10, wobei der periodische Informationsprozessor konfiguriert ist, den ersten Einbettungsraum unter Verwendung eines neuronalen Operators aus einem räumlichen Bereich in den Frequenzbereich zu übersetzen, mindestens eines der globalen Merkmale unter Verwendung eines spektralen Gating-Netzwerks zu identifizieren und eine inverse Transformation anzuwenden, um den ersten Einbettungsraum aus dem Frequenzbereich in den räumlichen Bereich zu übersetzen.

12. Rechensystem nach Anspruch 8, wobei der aperiodische Informationsprozessor lokale Merkmale in dem Eingabedatensatz unter Verwendung mindestens eines Faltungsoperators identifiziert, oder

wobei der Eingabedatensatz ein Bild ist, oder
wobei die erste Teilmenge und die zweite Teilmenge zusammen den Eingabedatensatz ergeben.

13. Ein oder mehrere materielle, von einem Prozessor lesbare Speichermedien (720), die Anweisungen zum Ausführen eines Prozesses (600) zur Klassifizierung eines Eingabedatensatzes (404, 304, 202) zur Diagnose von Tumoren, Läsionen und anderen medizinischen Zuständen auf einem oder mehreren Prozessoren (702) und Schaltkreisen einer Rechenvorrichtung (700) enthalten, wobei der Prozess (600) umfasst:

Einbetten (602) des Eingabedatensatzes (404, 304, 202) in einen ersten Einbettungsraum, wobei der Eingabedatensatz (404, 304, 202) ein hochauflösendes MRT-Bild umfasst;
Eingeben (604) des ersten Einbettungsraums in ein Spektralmodul, das einen periodischen Informationsprozessor (414) und einen aperiodischen Informationsprozessor (412) umfasst;
Identifizieren (606) globaler Merkmale in dem Eingabedatensatz (404, 304, 202) unter Verwendung des periodischen Informationsprozessors (414) auf der Grundlage einer ersten Teilmenge des ersten Einbettungsraums;
Identifizieren (608) erster lokaler Merkmale in dem Eingabedatensatz (404, 304, 202) unter Verwendung des aperiodischen Informationsprozessors (412) auf der Grundlage einer zweiten Teilmenge des ersten Einbettungsraums; und
Kombinieren (610) der globalen Merkmale und der ersten lokalen Merkmale zu einem Datensatz (404, 304) von klassifizierten Merkmalen des Eingabedatensatzes (404, 304, 202).

14. Ein oder mehrere materielle, von einem Prozessor lesbare Speichermedien nach Anspruch 13, wobei das Verfahren ferner umfasst:

Identifizieren zweiter lokaler Merkmale in dem Eingabedatensatz unter Verwendung eines Aufmerksamkeitsprozessors auf der Grundlage der Ausgabe des Spektralmoduls; und
Kombinieren der zweiten lokalen Merkmale mit den globalen Merkmalen und den ersten lokalen Merkmalen in dem Datensatz der klassifizierten Merkmale des Eingabedatensatzes, oder
wobei der periodische Informationsprozessor globale Merkmale in dem Eingabedatensatz unter Verwendung des Frequenzbereichs identifiziert und/oder
wobei der periodische Informationsprozessor den ersten Einbettungsraum von einem Raumbereich in den Frequenzbereich unter Verwendung einer Hartley-Transformation übersetzt, mindestens eines der globalen Merkmale unter Verwendung eines spektralen Gating-Netzwerks identifiziert und eine inverse Hartley-Transformation anwendet, um den ersten Einbettungsraum vom Frequenzbereich in den Raumbereich zu übersetzen.

15. Ein oder mehrere materielle, von einem Prozessor lesbare Speichermedien nach Anspruch 13 oder 14, wobei der aperiodische Informationsprozessor lokale Merkmale in dem Eingabedatensatz unter Verwendung mindestens eines Faltungsoperators identifiziert, oder
wobei die erste Teilmenge und die zweite Teilmenge sich gegenseitig ausschließen und zusammen den Eingabedatensatz ergeben.

**Revendications**

1. Procédé mis en œuvre par ordinateur (600) de classification d'un ensemble de données d'entrée (404, 304, 202) pour diagnostiquer des tumeurs, des lésions et d'autres affections médicales, le procédé (600) comprenant :

   l'incorporation (602) de l'ensemble de données d'entrée (404, 304, 202) dans un premier espace d'incorporation, dans lequel l'ensemble de données d'entrée (404, 304, 202) comprend une image IRM à haute résolution ;
   l'entrée (604) du premier espace d'incorporation dans un module spectral comportant un processeur d'informations périodiques (414) et un processeur d'informations apériodiques (412) ;
   l'identification (606) de caractéristiques globales dans l'ensemble de données d'entrée (404, 304, 202) à l'aide du processeur d'informations périodiques (414) sur la base d'un premier sous-ensemble du premier espace d'incorporation ;
   l'identification (608) de premières caractéristiques locales dans l'ensemble de données d'entrée (404, 304, 202) à l'aide du processeur d'informations apériodiques (412) sur la base d'un second sous-ensemble du premier espace d'incorporation, dans lequel le premier sous-ensemble et le second sous-ensemble sont différents ; et
   la combinaison (610) des caractéristiques globales et des premières caractéristiques locales dans un ensemble de données (404, 304) de caractéristiques classifiées de l'ensemble de données d'entrée (404, 304, 202).

2. Procédé selon la revendication 1, comprenant en outre :

   l'identification de secondes caractéristiques locales dans l'ensemble de données d'entrée à l'aide d'un processeur d'attention sur la base d'une sortie du module spectral ; et
   la combinaison des secondes caractéristiques locales avec les caractéristiques globales et les premières caractéristiques locales dans l'ensemble de données des caractéristiques classifiées de l'ensemble de données d'entrée.

3. Procédé selon la revendication 1 ou 2, dans lequel le processeur d'informations périodiques identifie des caractéristiques globales dans l'ensemble de données d'entrée en utilisant un domaine fréquentiel.

4. Procédé selon la revendication 3, dans lequel le processeur d'informations périodiques traduit le premier espace d'incorporation d'un domaine spatial en le domaine fréquentiel au moyen d'une transformée de Hartley, identifie au moins l'une des caractéristiques globales à l'aide d'un réseau de synchronisation d'image spectrale, et applique une transformée de Hartley inverse pour traduire le premier espace d'incorporation du domaine fréquentiel en le domaine spatial.

5. Procédé selon l'une des revendications 1 à 4, dans lequel le processeur d'informations apériodiques identifie des caractéristiques locales dans l'ensemble de données d'entrée à l'aide d'au moins un transformateur convolutif de Hartley.

6. Procédé selon l'une des revendications 1 à 5, dans lequel le premier sous-ensemble et le second sous-ensemble sont mutuellement exclusifs.

7. Procédé selon l'une des revendications 1 à 6, dans lequel le premier sous-ensemble et le second sous-ensemble se combinent pour produire l'ensemble de données d'entrée.

8. Système informatique (500, 100) de classification d'un ensemble de données d'entrée (404, 304, 202) pour diagnostiquer des tumeurs, des lésions et d'autres affections médicales, le système informatique (500, 100) comprenant :

   un ou plusieurs processeurs matériels (702) ;
   un processeur d'incorporation (504, 208), exécutable par les un ou plusieurs processeurs matériels (702) et configuré pour incorporer l'ensemble de données d'entrée (404, 304, 202) dans un premier espace d'incorporation, dans lequel l'ensemble de données d'entrée (404, 304, 202) comprend une image IRM à haute résolution ;
   un processeur spectral (508), exécutable par les un ou plusieurs processeurs matériels (702) et configuré pour entrer le premier espace d'incorporation dans un module spectral comportant un processeur d'informations périodiques (414) et un processeur d'informations apériodiques (412), dans lequel le processeur d'informations périodiques (414) est configuré pour identifier des caractéristiques globales dans l'ensemble de données d'entrée (404, 304, 202) sur la base d'un premier sous-ensemble du premier espace d'incorporation et le processeur d'informations apériodiques (412) est configuré pour identifier des premières caractéristiques locales dans l'ensemble de données d'entrée (404, 304, 202) sur la base d'un second sous-ensemble du premier espace d'incorporation, dans lequel le premier sous-ensemble et le second sous-ensemble sont différents ; et
une interface de sortie (520) exécutable par les un ou plusieurs processeurs matériels (702) et configurée pour combiner les caractéristiques globales et les premières caractéristiques locales dans un ensemble de données (404, 304) de caractéristiques classifiées de l'ensemble de données d'entrée (404, 304, 202).

9. Système informatique selon la revendication 8, dans lequel le processeur spectral délivre en sortie un second espace d'incorporation et comprenant en outre :
un processeur d'attention exécutable par les un ou plusieurs processeurs matériels et configuré pour identifier des secondes caractéristiques locales dans l'ensemble de données d'entrée au moyen d'un traitement d'attention sur la base du second espace d'incorporation, dans lequel l'interface de sortie est en outre configurée pour combiner les secondes caractéristiques locales avec les caractéristiques globales et les premières caractéristiques locales dans l'ensemble de données des caractéristiques classifiées de l'ensemble de données d'entrée.

10. Système informatique selon la revendication 8, dans lequel le processeur d'informations périodiques identifie des caractéristiques globales dans l'ensemble de données d'entrée en utilisant un domaine fréquentiel.

11. Système informatique selon la revendication 10, dans lequel le processeur d'informations périodiques est configuré pour traduire le premier espace d'incorporation d'un domaine spatial en le domaine fréquentiel au moyen d'un opérateur neuronal, identifier au moins l'une des caractéristiques globales à l'aide d'un réseau de synchronisation d'image spectrale, et appliquer une transformée inverse pour traduire le premier espace d'incorporation du domaine fréquentiel en le domaine spatial.

12. Système informatique selon la revendication 8, dans lequel le processeur d'informations apériodiques identifie des caractéristiques locales dans l'ensemble de données d'entrée à l'aide d'au moins un opérateur convolutif, ou

dans lequel l'ensemble de données d'entrée est une image, ou
dans lequel le premier sous-ensemble et le second sous-ensemble se combinent pour produire l'ensemble de données d'entrée.

13. Un ou plusieurs supports de stockage tangibles lisibles par processeur (720) incorporant des instructions destinées à exécuter, sur un ou plusieurs processeurs (702) et circuits d'un dispositif informatique (700), un processus (600) de classification d'un ensemble de données d'entrée (404, 304, 202) pour diagnostiquer des tumeurs, des lésions et d'autres affections médicales, le processus (600) comprenant :

l'incorporation (602) de l'ensemble de données d'entrée (404, 304, 202) dans un premier espace d'incorporation, dans lesquels l'ensemble de données d'entrée (404, 304, 202) comprend une image IRM à haute résolution ;
l'entrée (604) du premier espace d'incorporation dans un module spectral comportant un processeur d'informations périodiques (414) et un processeur d'informations apériodiques (412) ;
l'identification (606) de caractéristiques globales dans l'ensemble de données d'entrée (404, 304, 202) à l'aide du processeur d'informations périodiques (414) sur la base d'un premier sous-ensemble du premier espace d'incorporation ;
l'identification (608) de premières caractéristiques locales dans l'ensemble de données d'entrée (404, 304, 202) à l'aide du processeur d'informations apériodiques (412) sur la base d'un second sous-ensemble du premier espace d'incorporation ; et
la combinaison (610) des caractéristiques globales et des premières caractéristiques locales dans un ensemble de données (404, 304) de caractéristiques classifiées de l'ensemble de données d'entrée (404, 304, 202).

14. Un ou plusieurs supports de stockage tangibles lisibles par processeur selon la revendication 13, dans lesquels le processus comprend en outre :

l'identification de secondes caractéristiques locales dans l'ensemble de données d'entrée à l'aide d'un processeur d'attention sur la base d'une sortie du module spectral ; et
la combinaison des secondes caractéristiques locales avec les caractéristiques globales et les premières caractéristiques locales dans l'ensemble de données des caractéristiques classifiées de l'ensemble de données d'entrée, ou
dans lesquels le processeur d'informations périodiques identifie des caractéristiques globales dans l'ensemble de données d'entrée en utilisant un domaine fréquentiel, et/ou

dans lesquels le processeur d'informations périodiques traduit le premier espace d'incorporation d'un domaine spatial en le domaine fréquentiel au moyen d'une transformée de Hartley, identifie au moins l'une des caractéristiques globales à l'aide d'un réseau de synchronisation d'image spectrale, et applique une transformée de Hartley inverse pour traduire le premier espace d'incorporation du domaine fréquentiel en le domaine spatial.

15. Un ou plusieurs supports de stockage tangibles lisibles par processeur selon la revendication 13 ou 14, dans lesquels le processeur d'informations apériodiques identifie des caractéristiques locales dans l'ensemble de données d'entrée à l'aide d'au moins un opérateur convolutif, ou

dans lesquels le premier sous-ensemble et le second sous-ensemble sont mutuellement exclusifs et se combinent pour produire l'ensemble de données d'entrée.

100

102

Transformer
<u>104</u>

Identified Features
<u>106</u>

FIG. 1

200

Classifier Head
224

Processing Modules
210

Attention Layer
222

Attention Layer
220

Attention Layer
218

Attention Layer
216

Spectral Layer
214

Spectral Layer
212

203

Position Embedder
206

Linear Projection Layer
204

201

208

Input Dataset
202

FIG. 2

300

306

FIG. 3

FIG. 4

**FIG. 5**

600

Embed the input dataset into a first embedding space
602

Input the first embedding space into a spectral module including a periodic information processor and an aperiodic information processor
604

Identify global features in the input dataset using the periodic information processor based on a first subset of the first embedding space
606

Identify first local features in the input dataset using the aperiodic information processor based on a second subset of the first embedding space
608

Combine the global features and the first local features into a dataset of classified features of the input dataset
610

# FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022156587 A1

**Non-patent literature cited in the description**

- HartleyMHA: Self-attention in Frequency Domain for Resolution-Robust and Parameter-Efficient 3D Image Segmentation. **WONG KEN C L et al.** Medical Image Computing and Computer Assisted Intervention - MICCAI 2023; [Lecture Notes in Computer Science; Lect.Notes Computer. Springer Nature Switzerland, 01 October 2023, 364-373

- **BADRI N PATRO et al.** SpectFormer: Frequency and Attention is what you need in a Vision Transformer. Olin Library Cornell University, 13 April 2023